# EUROPEAN PATENT APPLICATION

(11) **EP 3 407 191 A1**
(43) Date of publication of application: **28.11.2018**
(21) Application number: 18174074.7
(22) Date of filing: 24.05.2018
(51) Int. Cl.: G06F 9/48

(54) **MANAGING JOB SCHEDULES**

(30) Priority: 24.05.2017 US 201715603499
(71) Applicant: Verisign, Inc., Virginia 20190 (US)
(72) Inventor: CROUSE, Gregory, Reston, VA 20190 (US); GAROTHAYA, Vijay, Reston, VA 20190 (US); GATAMANENI, Lavanya, Reston, VA 20190 (US)
(74) Representative: Cabinet Beau de Loménie

(57) **Abstract**

Systems, methods, and computer program products for scheduling computing jobs are disclosed. In implementations, the systems, methods, and computer program products perform operations including determining (321) that a first computing job has a dependency on a second computing job. The operations also include determining a type of the dependency on the second computing job. The operations further include determining (329, 333) a completion status of the second computing job. Additionally, the operations include executing the first computing job based on the completion status of the second computing job and the type of the dependency on the second computing job. The operations can further include executing the second computing job based on a schedule and/or based on the type of dependency. The type of dependency can include a hard dependency and a soft dependency.

## Description

### BACKGROUND

The execution of jobs that involve substantially no human interaction or control is sometimes referred to as "batch processing." Batch processing is commonly used for jobs that are computationally intensive and/or involve large amounts of information. Such jobs may include processing large sets of data, such as databases used in domain name registration systems, airline flight scheduling systems, payroll systems, modeling and simulation systems, and the like.

Computing systems may use job scheduling software to maximize the efficiency of batch processing. Conventional job scheduling software determines an order in which jobs are executed using several parameters associated with the job. For example, job scheduling software can execute jobs based on a frequency (e.g., daily, weekly or monthly) and a priority (e.g., high or low) associated with each job.

### SUMMARY

Implementations consistent with the present disclosure provide a scheduling system for scheduling computing jobs. The scheduling system can include a processor, a data storage device, and program instructions stored on the data storage device that, when executed by the processor, control the scheduling system to perform operations including determining that a first computing job has a dependency on a second computing job. The operations also include determining a type of the dependency on the second computing job. The operations further include determining a completion status of the second computing job. Additionally, the operations include executing the first computing job based on the completion status of the second computing job and the type of the dependency on the second computing job. The operations can further include executing the second computing job based on a schedule and/or based on the type of dependency. The dependency type information can be one of a hard dependency type and a soft dependency type. The hard dependency type indicates that the second computing job must be successfully completed before starting execution of a first computing job. The soft dependency type indicates that the second computing job must be completed before starting execution of the first computing job regardless of whether the second computing job completed successfully.

Additionally, implementations consistent with the present disclosure provide a method for scheduling computing jobs. The method includes determining that a first computing job has a dependency on a second computing job. The method also includes determining a type of the dependency on the second computing job. The method further includes determining a completion status of the second computing job. Additionally, the method includes executing the first computing job based on the completion status of the second computing job and the type of the dependency on the second computing job. The method can further include executing the second computing job based on a schedule and/or based on the type of dependency. The dependency type information can be one of a hard dependency type and a soft dependency type. The hard dependency type indicates that the second computing job must be successfully completed before starting execution of the first computing job. The soft dependency type indicates that the second computing job must be completed before starting execution of the first computing job regardless of whether the second computing job completed successfully.

Further, implementations consistent with the present disclosure provide a computer program product containing program instruction stored on a computer-readable data storage device. The program instructions, when executed by a processor, control a job scheduling system to perform operations including maintaining job status information of computing jobs, the job status information indicating whether individual computing jobs have been executed, whether the execution was complete, and whether the execution was successful. The operations also include maintaining a job execution queue for the computing jobs based on respective job schedule parameters of the computing jobs and the respective job status information of the computing jobs. The operations further include determining that a first computing job depends on a second computing job based on a job dependency parameter of the first computing job. Additionally, the operations include determining that the second computing job is incomplete based on the respective job status information of the second computing job. Moreover, the operations include skipping execution of the first computing job by excluding the first computing job from the job execution queue.

### DRAWINGS

The present invention will become more fully understood from the detailed description and the accompanying drawings, wherein:
FIG. 1 illustrates a block diagram of an example of an environment for implementing systems and processes in accordance with aspects of the present disclosure;
FIG. 2 illustrates a block diagram of an example of a system in accordance with aspects of the present disclosure;
FIG. 3 illustrates a functional flow diagram of an example of a process in accordance with aspects of the present disclosure;
FIG. 4 illustrates a functional flow diagram of an example of a process in accordance with aspects of the present disclosure;
FIG. 5 illustrates an example of batch processing in accordance with aspects of the present disclosure; and
FIG. 6 illustrates an example of a data structure including job schedule parameters in accordance with aspects of the present disclosure.

### DETAILED DESCRIPTION

The present disclosure is generally directed to computer systems, and more specifically to managing execution of jobs in computing systems. In accordance with aspects of the present disclosure, systems and methods are provided that schedule the execution of jobs based on their frequencies (e.g., hourly, daily, monthly, etc.) and their dependence on one or more other jobs. In implementations, the dependencies on other jobs can include hard dependencies or soft dependencies. A hard dependency associated with a first job requires successful completion of at least one other job before execution of the first job. A soft dependency associated with a first job requires completion (successful or unsuccessful) of the second job before execution of the first job.

Additionally, in implementations, the systems and methods disclosed herein can skip dependent jobs if they are not scheduled for a particular time frame (e.g., that day). For example, if a first job is scheduled to execute monthly (e.g., once each month), a second job is scheduled to execute weekly (once each week), and a third job is scheduled to execute daily. Further, the third job may be dependent on the first job and the second job. Accordingly, the third job will wait for first job and second job to finish if they were scheduled to run for that day.

Systems and methods consistent with those disclosed herein improve the technology and efficiency of computer systems (e.g., a conventional computing system performing batch processing) by maximizing the utilization of computing resources (e.g., available processing bandwidth) and/or by minimizing the total time to execute a set of jobs. Additionally, the systems and methods consistent with those disclosed herein improve current job scheduling software by providing combinations of scheduling parameters that maximize utilization of the computing resources. Further, the systems and methods consistent with those disclosed herein reduce the costs of maintaining a large number of jobs by minimizing the complexity involved in rerunning unsuccessful jobs and in a correct sequence.

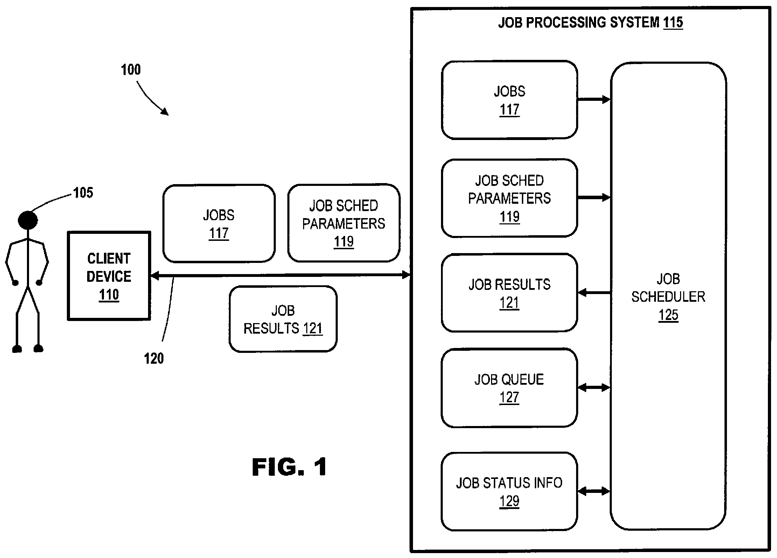

FIG. 1 illustrates a block diagram of an example of an environment 100 for implementing systems and methods in accordance with aspects of the present disclosure. The environment 100 can include a user 105, a client device 110, and a job processing system 115. The user 105 can be any entity that manages and/or monitors the job processing system 115 using the client device 110. For example, the user 105 can be an administrator of the job processing system 115 who provides jobs 117 and job schedule parameters 119 to the job processing system 115 and/or receives job results 121 from the job processing system 115. The client device 110 can be a computing system that is communicatively connected (directly or indirectly) to the job processing system 115 via one or more communication channels 120. In implementations, the client device 110 can be a personal computing device, a terminal of the job processing system 115, or a server (e.g., a Web server) that provides a user interface. For example, the client device 110 may provide the user 105 a graphic user interface through which the user 105 can provide the job schedule parameters 119 to the job processing system 115 in association with particular jobs 117. The communication channel 120 can comprise a wired or wireless data link and/or communication networks, such as a data bus, a local area network, a wide area network, or the Internet.

The job schedule parameters 119 can be information about or associated with a particular job, such as an identification parameter (e.g., job 1, job 2, or job 3), a frequency parameter (e.g., daily, monthly, etc.), a start time parameter (e.g., 12:01 AM), one or more dependency parameters (e.g., job 3 depends on completion of job 1 and job 2), and one or more dependency type parameters associated with the dependency parameters (e.g., soft or hard).

The job processing system 115 can include one or more computing devices that execute computer-readable program instructions of a job scheduler 125 that configures the computing devices as a specialized machine that manages and executes the jobs 117 to produce the job results 121 based on the job schedule parameters 119. The job processing system 115 can store the jobs 117, the job schedule parameters 119 for reference by the job scheduler 125, and the job results 121.

Additionally, the job processing system 115 can include a job execution queue 127 and job status information 129, which can be referenced and updated by the job scheduler 125. The job execution queue 127 can be a set of information (e.g., a table of data) identifying a sequence of execution for the jobs 117 determined by the job processing system 115 based on the job schedule parameters 119, as detailed below. For example, the job processing system 115 can selectively execute the jobs 117 in the sequence and/or the time defined by the job execution queue 127. The job status information 129 can comprise information indicating whether each job has been executed, whether such execution was complete, and whether such execution was successful. The job scheduler 125 can repeatedly (e.g., periodically) attempt to re-run jobs of 117 that the job status information indicates as being unexecuted (e.g., skipped).

While the environment 100 shown in FIG. 1 illustrates the job processing system 115 as a single system used by a single user 105, it is understood that the environment 100 can comprise a number of job processing systems 115 used by a number of users 105. For example, the environment 100 can be implemented as a distributed system (e.g., a cloud computing environment) that serves a number of users 115 at different locations via, for example, by a wide area network. Additionally, it is understood that the jobs 117, the job schedule parameters 119, the job results 121, the job execution queue 127, and the job status information 129, can be stored and/or executed at the one or more locations at which portions of the job processing system 115 are implemented.

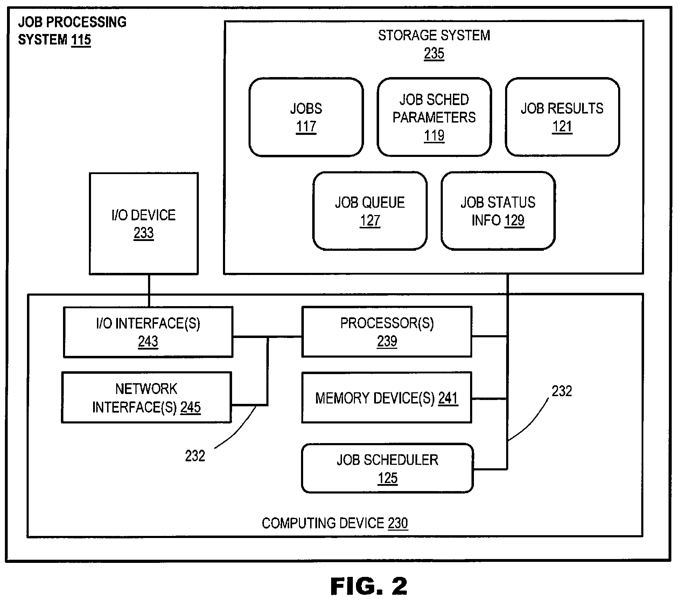

FIG. 2 shows a system block diagram illustrating an example of a job processing system 115 in accordance with aspects of the present disclosure. The job processing system 115 includes hardware and software that perform processes, services, and functions described herein. In particular, the job processing system 115 includes a computing device 230, an input/output (I/O) device 233, and a storage system 235. The I/O device 233 can include any device that enables an individual (e.g., an operator, an end user and/or consumer) to interact with the computing device 230 and/or any device that enables the computing device 230 to communicate with one or more other computing devices (e.g., client device 110) using any type of communications link (e.g., communication link 120). The I/O device 233 can include, for example, a touchscreen display, pointer device, keyboard, etc. In implementations, the I/O device can provide a user interface for the job processing system 115 to another computing device (e.g., client device 110).

The storage system 235 can comprise a computer-readable, non-volatile hardware storage device that stores information and program instructions. For example, the storage system 235 can be one or more flash memories and/or hard disk drives. In accordance with aspects of the present disclosure, the storage system 235 can store the jobs 117, the job schedule parameters 119, the job results 121, the job execution queue 127, and the job status information 129, which can be the same or similar to those previously described herein.

In embodiments, the computing device 230 includes one or more processors 239 (e.g., a microprocessor, a microchip, or an application-specific integrated circuit), one or more memory devices 241 (e.g., random access memory (RAM) and read only memory (ROM)), one or more I/O interfaces 243, and one or more network interfaces 245. The memory device 241 can be a local memory (e.g., RAM and a cache memory) employed during execution of program instructions. Additionally, the computing device 230 includes at least one communication channel 232 (e.g., a data bus) by which it communicates with the I/O device 233, the storage system 235, etc. The processor 239 executes computer program instructions (e.g., an operating system and/or application programs), which can be stored in the memory device 241 and/or storage system 235. Moreover, the processor 239 can execute computer program instructions of the job scheduler 125, which may be the same or similar to those previously discussed herein.

It is noted that the computing device 230 is only representative of various possible equivalent computing devices that can perform the processes described herein. To this extent, in embodiments, the functionality provided by the computing device 230 can be any combination of general and/or specific purpose hardware and/or computer program instructions. In each embodiment, the program instructions and hardware can be created using standard programming and engineering techniques, respectively.

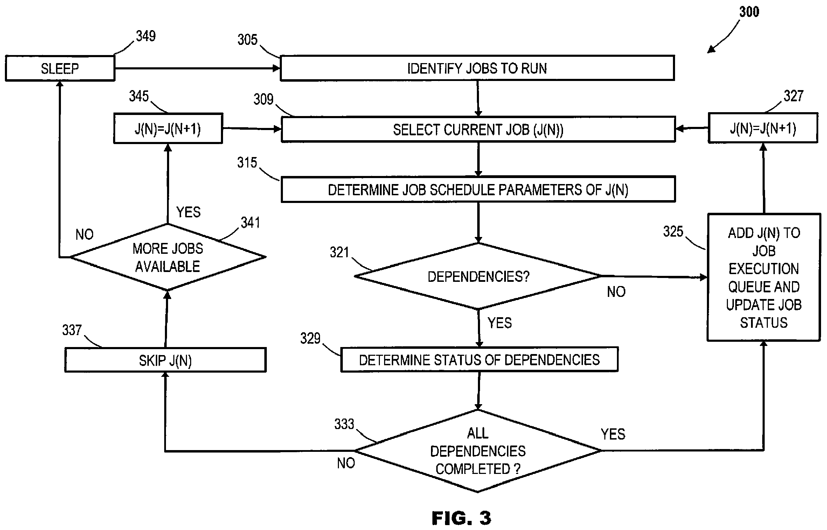

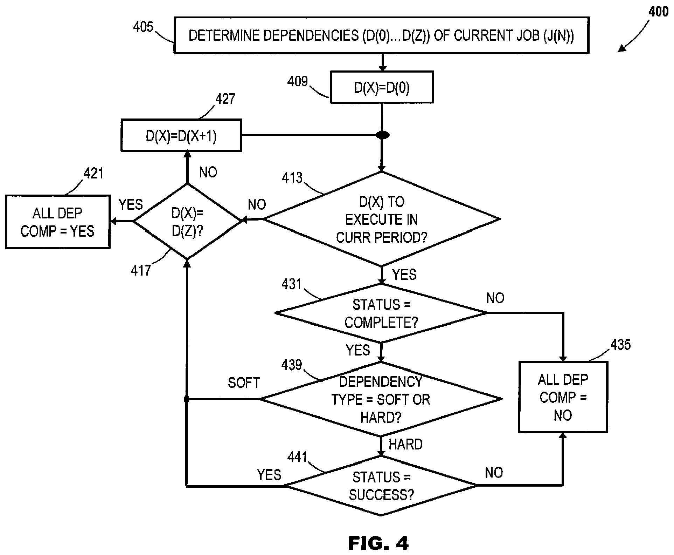

The flow diagrams in FIGS. 3 and 4 illustrate examples of the functionality and operation of possible implementations of systems, methods, and computer program products according to various implementations consistent with the present disclosure. Each block in the flow diagrams of FIGS. 3 and 4 can represent a module, segment, or portion of program instructions, which includes one or more computer executable instructions for implementing the illustrated functions and operations. In some alternative implementations, the functions and/or operations illustrated in a particular block of the flow diagram can occur out of the order shown in FIGS. 3 and 4. For example, two blocks shown in succession can be executed substantially concurrently, or the blocks can sometimes be executed in the reverse order, depending upon the functionality involved. It will also be noted that each block of the flow diagram and combinations of blocks in the block can be implemented by special purpose hardware-based systems that perform the specified functions or acts, or combinations of special purpose hardware and computer instructions.

FIG. 3 shows a flow block diagram illustrating an example of a process 300 (e.g., performed by job scheduler 125) for scheduling jobs (e.g., jobs 117) in accordance with aspects of the present disclosure. The process 300 iteratively evaluates jobs for execution by a computing system (e.g., job processing system 115) based on respective job schedule parameters (e.g., job schedule parameters 119) of the jobs. In some implementations, the process 300 may sequentially evaluate all the jobs included in the set of jobs. In some implementations, the process 300 may evaluate a subset of the jobs included in the database by filtering the jobs based on their associated job schedule parameters. For example, the process 300 may limit the evaluation of jobs to those having job schedule parameters indicating execution during the current time period (e.g., during a particular day) and/or jobs that were skipped or unsuccessfully run during a previous time period (e.g., a previous day).

At 305, the process 300 identifies one or more jobs to run (e.g., batch processed). In implementations, one or more users (e.g., user 105) may provide the jobs and/or job schedule parameters associated with the jobs to a job scheduler (e.g., job scheduler 125 executed by job processing system 115) via a client device (e.g., client device 110). For example, a particular user may provide new or updated job schedule parameters defining a schedule, dependencies, and dependency types for a particular job based on an identifier of the job. The job schedule parameters can be stored (e.g., in storage device 235) for reference by the job scheduler.

The jobs identified at 305 can be selected for potential execution by the process 300. At 309, the process 300 selects a current job (J(N)) from the jobs identified at 305. During a first iteration of the process 300, N can be set to 1, such that the process 300 schedules the first job as J(1). As detailed below, the process 300 may iteratively evaluate the other jobs included in those identified at 305 by incrementally increasing N.

At 315, the process 300 fetches, reads or otherwise determines the job schedule parameters for the current job selected at 309. At 321, the process 300 determines whether the job schedule parameters determined at 315 include any dependencies. In accordance with aspects of the present disclosure, a dependency is a job that must be completed before the current job is executed (e.g., a job upon which another job has a soft dependency or a hard dependency). The dependencies of the current job can be determined based on the job schedule parameters (e.g., job schedule parameters 119). For example, the job scheduling information can indicate a dependency that requires one or more other jobs to be processed before a current job. Further, each of such other jobs may also one or more other jobs to be processed before them. The status of the dependencies can be obtained by referencing job status information (e.g., job status information 129), which includes information describing the state (e.g., unscheduled, pending scheduled, executing, completed/uncompleted, and successful/failed) of the jobs scheduled by the scheduler or stored in the jobs database.

If no job dependencies are determined at 321 (i.e., 321 is "No"), then at 325 the current job selected at 309 can be added to the job execution queue (e.g., job queue 127) for execution. In some situations, the job is added to the queue at 325 for substantially immediate processing (e.g., immediately or immediately after processing a preceding job included in the queue) and the process records information updating the job status in the job status information. In other situations, the job added to the queue can be scheduled for execution at a later time or at a defined start time (e.g., 00:10) indicated in the job schedule parameters. At 327, the process 300 can set a next job (e.g., J(N)+J(N+1)) in the jobs identified at 305 as the current job for evaluation and iteratively return to 309.

If at 321 the process 300 determines that the job schedule parameters of the current job include a dependency (i.e., 321 is "Yes"), then at 329 the process 300 determines the status of the dependencies based on respective job status information (e.g., job status information 129) of the other jobs. At 333, the process 300 determines whether all the dependencies determined at 321 are completed based on the status determination at 329. If all dependencies are completed (i.e., 333 is "Yes"), then at 325 the current job selected at 309 is added to the job execution queue for execution. If all dependencies are not completed (i.e., 333 is "No"), then at 337 the process 300 skips execution of the current job. The current job may be skipped for a predetermined period of time (e.g., a minute or a day), after which the job may be reconsidered in a subsequent iteration of process 300 (e.g., after 349).

At 341, the process 300 can determine whether more jobs are available from those identified at 305. If more jobs are available (i.e., 341 is "Yes"), then at 331 the process 300 can set a next job (e.g., J(N)+J(N+1)) as the current job for evaluation at 345, and iteratively return to 309 to evaluate such job. After iterating through all the jobs, then at 349 the process will sleep for a period of time (e.g., a second, minute, hour, or day). For example, the process 300 may become dormant for ten seconds, before restarting at 305. After such period, the process 300 can restart at 305 by identifying jobs to run, which can include one or more jobs that were skipped at 337.

FIG. 4 shows a flow block diagram illustrating an example of a process 400 for determining whether all dependencies of a job are completed. The process 400 can be the same or similar to that previously described herein with regard to 333 of FIG. 3. At 405, the process 400 can determine dependencies of a current job (e.g., the current job J(N) of FIG. 3). Based on the dependencies determined at 405, the process 400 may reference job schedule parameters to identify all dependencies of the current job, as well as any dependencies of those dependencies, and so on. The job identifiers of the dependencies determined at 405 can be stored as a set (represented in FIG. 4 as D(0) ... D(Z) of J(N)).

At 409, the process 400 initiates an iterative process for evaluating the status of the dependencies determined at 405. In implementations, the process 400 can set a first dependency (D(0)) determined at 405 as the current dependency (D(X)) for evaluation. At 413, the process 400 determines whether the current dependency is scheduled to execute within a current time period (e.g., the current day). For example, based on a comparison of job schedule information (e.g., job schedule parameters 119) of the current job (J(N)) and of the current dependency (D(X)), the process 400 can determine whether both the current job and the current dependency are scheduled to execute within the same time period.

If the current dependency will not execute within the same time period as the current job (i.e., 413 is "No"), then at 417 the process 400 can determine whether the current dependency is the last dependency in the set of dependencies determined at 405. If the process 400 determines at 417 that the current dependency is the last dependency to evaluate (i.e., D(X) = D(Z)) is "Yes"), then at 421 the process 400 determines that all dependencies of the current job are complete (e.g., 333 of FIG. 3 is "Yes"). Accordingly, the current job may be executed (e.g., 325 of FIG. 3). If the process 400 determines at 417 that the current dependency is not the last dependency to evaluate (i.e., D(X) = D(Z)) is "No"), then at 427 the process 400 can set the next dependency of the dependencies determined at 405 to be the current dependency for evaluation (i.e., D(X) = D(X) + 1) and iteratively return to 413.

At 413, if the process 400 determines that the current dependency is scheduled to execute in the current time period (i.e., 413 is "Yes"), then there may be a scheduling conflict between the current job and the dependency. Accordingly, at 413, if the current dependency is scheduled execute within the current time period, then at 431 the process 400 determines whether the status of the current dependency is complete. The process 400 can determine the status of the current dependency based on job status information (e.g., job status information 129) maintained by the job scheduler (e.g., job scheduler 125). At 431, if the process 400 determines that the current dependency is not complete (i.e., 431 is "No"), then at 435 the process 400 determines that all dependencies are not completed (e.g., 333 of FIG. 3 is "No"). Accordingly, the current job may be skipped as described previously herein (e.g., 337 of FIG. 3).

If at 431 the process determines that the current dependency is complete (i.e., 431 is "Yes"), then at 439, the process 400 determines whether the type of dependency is soft or hard. If the dependency is determined to be "soft" at 439, then there is no scheduling conflict between the current job and the dependency. Accordingly, the process 400 returns to 417 and determines whether the current dependency is the last dependency to evaluate before iteratively returning to 413 as previously described herein.

If the dependency type determined at 439 is "hard," then at 441, the process 400 determines whether the status of the dependency is "successful" based on the job status information. If the process 400 determines that the status of the dependency is not successful at 441 (i.e., 441 is "No"), then at 435 the process 400 determines that all dependencies are not completed (i.e., "all dependencies completed = No"). If the process 400 determines that the dependency was "successful" at 441 (i.e., 441 is "Yes"), then at 423 the process 400 determines at 417 whether the current dependency is the last dependency to evaluate before iteratively returning to 413 as previously described herein.

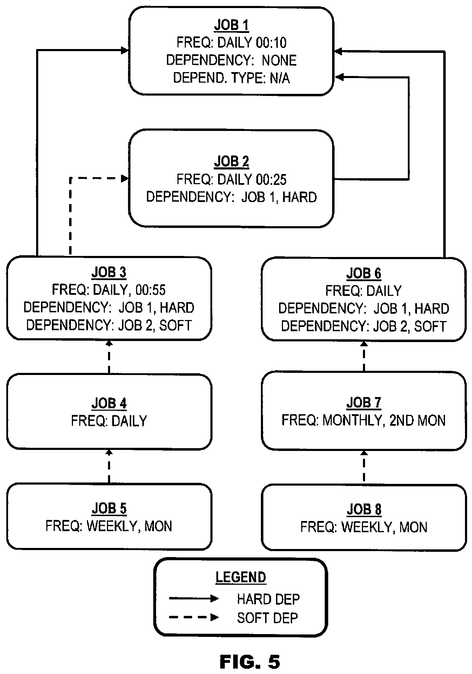

FIG. 5 shows a flow block diagram 500 illustrating job schedule parameters (e.g., job schedule parameters 119) for a set of jobs (e.g., jobs 117) in accordance with an example consistent with the present disclosure. The information illustrated in FIG. 5 can be, for example, input to a job scheduler (e.g., job scheduler 125) of a job processing system (e.g., job processing system 125) by one or more users (e.g., user 105) via a client device (e.g., client device 105). The jobs can include Job 1 (J(1)), Job 2 (J(2)), Job 3 (J(3)), Job 4 (J(4)), Job 5 (J(5)), Job 6 (J(6)), Job 7 (J(7)), and Job 8 (J(8)), wherein the numerals 1-8 represent identifying job numbers. As illustrated in FIG. 5, Job 1 is scheduled to execute daily at 00:10 and lacks a dependency. Job 2 is scheduled to execute daily at 00:25 and has a hard dependency on Job 1. Thus, in accordance with aspects of the present disclosure, Job 2 will not be executed until after Job 1 successfully completes execution. Job 3 is scheduled to execute daily at 00:55 and has a hard dependency on Job 1 and a soft dependency on Job 2. Thus, in accordance with aspects of the present disclosure, Job 3 will not be executed until after Job 1 successfully completes execution. Additionally, Job 3 will not be executed until after Job 2 completes execution (regardless of success). Job 4 is scheduled to execute daily and has soft dependency on Job 3. Job 5 is scheduled to execute weekly, on Mondays and has a soft dependency on Job 4. Job 6 is scheduled to daily and has a hard dependency on Job 1. Job 7 is scheduled to execute monthly, on the second Monday of the month and has a soft dependency on Job 6. Job 8 is scheduled to execute weekly, on Mondays and has a soft dependency on Job 7.

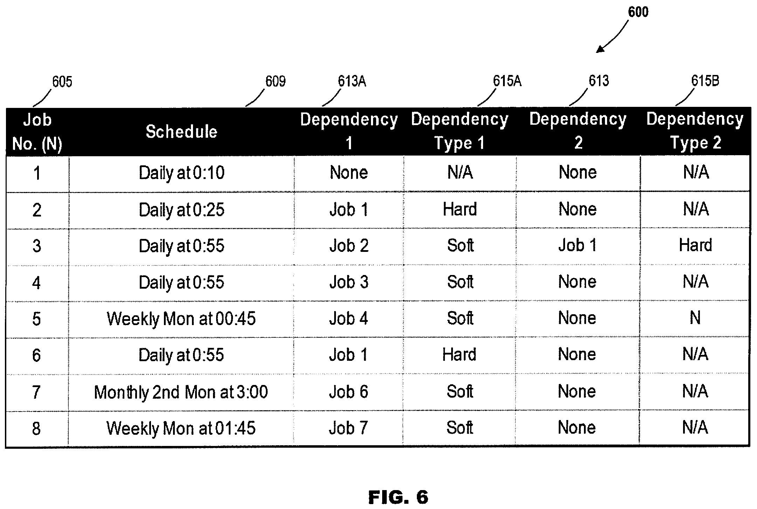

FIG. 6 illustrates an example of a data structure 600 for storing job schedule parameters (e.g., job schedule parameters 119), as shown in the flow block diagram 500 in accordance with an example consistent with the present disclosure. The data structure 600 can include job schedule parameters, such as a job number 605, scheduling information 609, dependencies 613A and 613B, and dependency types 615A and 615B, which can be the same or similar to those describe previously herein. A scheduler application (e.g., job scheduler 125) can reference the data structure 600 to evaluate a set of jobs (e.g., jobs 117) to determine a schedule for executing the set of jobs, such as described previously herein with regard to FIGS. 3 and 4.

The foregoing description is illustrative, and variations in configuration and implementation may occur to persons skilled in the art. For instance, the various illustrative logics, logical blocks, modules, and circuits described in connection with the embodiments disclosed herein may be implemented or performed with a general purpose processor (e.g., processor 739), an application specific integrated circuit, a field programmable gate array or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a microprocessor, a plurality of microprocessors, or any other such configuration.

In one or more exemplary embodiments, the functions described may be implemented in hardware, software, firmware, or any combination thereof. For a software implementation, the techniques described herein can be implemented with modules (e.g., procedures, functions, subprograms, programs, routines, subroutines, modules, software packages, classes, and so on) that perform the functions described herein. A module can be coupled to another module or a hardware circuit by passing and/or receiving information, data, arguments, parameters, or memory contents. Information, arguments, parameters, data, or the like can be passed, forwarded, or transmitted using any suitable means including memory sharing, message passing, token passing, network transmission, and the like. The software codes can be stored in memory units (e.g., memory device 241 or storage system 235) and executed by the processor. The memory unit can be implemented within the processor or external to the processor (e.g., processor 239), in which case it can be communicatively coupled to the processor via various means as is known in the art.

If implemented in software, the functions may be stored on or transmitted over a computer-readable medium as one or more instructions or code. Computer-readable media includes non-transitory computer storage media and communication media including any medium that facilitates transfer of a computer program from one place to another. A storage media may be any available tangible, non-transitory media that can be accessed by a computer. By way of example, and not limitation, such tangible, non-transitory computer-readable media can comprise RAM, ROM, flash memory, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes CD, laser disc, optical disc, DVD, floppy disk and Blu-ray disc where disks usually reproduce data magnetically, while discs reproduce data optically with lasers. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Combinations of the above should also be included within the scope of computer-readable media.

Resources described as singular or integrated can in one embodiment be plural or distributed, and resources described as multiple or distributed can in embodiments be combined. The scope of the present teachings is accordingly intended to be limited only by the following claims. Although the invention has been described with respect to specific embodiments, those skilled in the art will recognize that numerous modifications are possible. For instance, the proxy servers can have additional functionalities not mentioned herein. In addition, embodiments of the present disclosure can be realized using any combination of dedicated components and/or programmable processors and/or other programmable devices. While the embodiments described above can make reference to specific hardware and software components, those skilled in the art will appreciate that different combinations of hardware and/or software components can also be used and that particular operations described as being implemented in hardware might also be implemented in software or vice versa.

## Claims

1. A method for scheduling computing jobs comprising:
determining (321, 405) that a first computing job of a plurality of computing jobs has a dependency on a second computing job of the plurality of computing jobs;
determining (439) a type of the dependency on the second computing job;
determining (333, 431) a completion status of the second computing job; and
executing (325) the first computing job based on the completion status of the second computing job and the type of the dependency on the second computing job.

2. The method of claim 1, further comprising determining job schedule parameters of the first computing job, the job schedule parameters including scheduling information, dependency information, and dependency type information.

3. The method of claim 2, wherein the scheduling information indicates a time period for starting execution of the first computing job.

4. The method of claim 2 or 3, wherein the dependency information indicates a computing job that must complete execution before starting execution of the first computing job.

5. The method of claim 4, wherein the dependency type information indicates the type of the dependency on the computing job that must complete execution.

6. The method of claim 5, wherein the dependency type information is selected from a group consisting of a hard dependency type and a soft dependency type.

7. The method of claim 6, wherein:
the hard dependency type indicates that the computing job that must complete execution is required to be successfully completed before starting execution of the first computing job, and
the soft dependency type indicates that the computing job that must complete execution is required to be completed before starting execution of the first computing job regardless of whether the computing job that must complete execution completed successfully.

8. The method of any of claims 1-7, further comprising determining (333, 337) whether to skip the first computing job based on the dependency on the second computing job.

9. The method of claim 8, wherein determining whether to skip the first computing job comprises:
determining a dependency of the first computing job;
determining a dependency of the dependency of the first computing job;
determining whether the dependency of the first computing job and the dependency of the dependency of the first computing job are scheduled for execution during a time period indicated by scheduling information of the first computing job;
determining whether the dependency of the first computing job scheduled for execution is complete; and
determining whether the dependency of the dependency of the first computing job scheduled for execution is complete.

10. A scheduling system for scheduling computing jobs, the scheduling system comprising a processor, a data storage device, and program instructions stored on the data storage device that, when executed by the processor, control the scheduling system to perform a method for scheduling computing jobs according to any of claims 1-9.

11. A computer program product containing program instruction stored on a computer-readable data storage device, the program instructions, when executed by a processor, control a job scheduling system to perform operations comprising:
maintaining job status information (129) of a plurality of computing jobs (117), the job status information indicating whether individual computing jobs of the plurality of jobs have been executed, whether the execution was complete, and whether the execution was successful;
maintaining a job execution queue (127) for the plurality of computing jobs (117) based on respective job schedule parameters (119) of the plurality of computing jobs (117) and the respective job status information of the plurality of computing jobs (117);
determining (321, 405) that a first computing job of the plurality of computing jobs depends on a second computing job of the plurality of computing jobs based on a job dependency parameter of the first computing job;
determining (333, 431, 435) that the second computing job is incomplete based on the respective job status information of the second computing job; and
skipping execution (337) of the first computing job by excluding the first computing job from the job execution queue.

12. The computer program product of claim 11, further comprising determining a dependency type parameter of the first computing job.

13. The computer program product of claim 12, wherein:
the dependency type parameter is selected from a group consisting of a hard dependency type and a soft dependency type;
the hard dependency type indicates that the second computing job must be completed successfully before starting execution of a first computing job, and
the soft dependency type indicates that the second computing job must be completed before starting execution of the first computing job regardless of whether the second computing job completed successfully.
